# EUROPÄISCHE PATENTANMELDUNG

(11) **EP 1 475 182 A1**
(43) Veröffentlichungstag der Anmeldung: **10.11.2004**
(21) Anmeldenummer: 04007796.8
(22) Anmeldetag: 31.03.2004
(51) Int. Cl.: B23K 26/14, B23K 26/08, B23K 26/10, B23K 26/06, B23K 26/36

(54) **Vorrichtung und Arbeitsverfahren zur Laserbearbeitung mit einem eine verstellbare Umlenkeinheit umfassenden Laserkopf**

(30) Priorität: 09.05.2003 DE 10321123
(71) Anmelder: LPKF Laser & Electronics AG, 30827 Garbsen (DE)
(72) Erfinder: Wenke, Stephan, 31535 Neustadt/Poggenhagen (DE)
(74) Vertreter: Scheffler, Jörg

(57) **Zusammenfassung**

Die Erfindung betrifft eine Vorrichtung (1) zur Laserbearbeitung mit einem Schneidkopf (3). Der Schneidkopf (3) ist gegenüber einer Auflage (6) für ein zu bearbeitendes Werkstück (7) relativ beweglich ausgeführt und weist zusätzlich zur Positionierung des Laserstrahls (2) auf der Oberfläche des Werkstücks (7) eine verstellbare Umlenkeinheit (8) auf. Der Verstellbereich der Umlenkeinheit (8) ist dabei durch die Düsenöffnung (9) einer Düse (10) bestimmt, durch die der Laserstrahl (2) zugleich mit einem Druckgas auf die zu bearbeitende Oberfläche gelenkt wird. Hierdurch werden zugleich eine hohe Dynamik, insbesondere also hohe Vorschubgeschwindigkeiten, sowie auch eine hohe Abtragsleistung mittels des Druckgases erreicht. Dabei kann sowohl der Schneidkopf (3) als auch der Laserstrahl (2) relativ zu dem Werkstück (7) überlagert bewegt werden, um so die Bearbeitungsgeschwindigkeit zu erhöhen.

## Beschreibung

Die Erfindung betrifft eine Vorrichtung zur Laserbearbeitung mit einem Schneidkopf, welcher gegenüber einer Auflage für ein zu bearbeitendes Werkstück relativ beweglich ausgeführt ist, wobei der Schneidkopf eine Fokussieroptik aufweist, durch die der Laserstrahl durch eine Düsenöffnung einer Düse, zugleich mit einem mit Überdruck durch diese austretenden Gas einer zu bearbeitenden Oberfläche des Werkstücks zuführbar ist. Weiterhin betrifft die Erfindung ein Arbeitsverfahren zur Laserbearbeitung eines Werkstückes mittels eines Laserstrahls.

Solche Vorrichtungen zur Laserbearbeitung sind in der Praxis bereits bekannt, und zählen daher durch offenkundige Vorbenutzung zum Stand der Technik. Beispielsweise werden derartige Vorrichtungen zur Laserbearbeitung beim Schneiden oder Bohren von dünnen Blechen, Polymermaterialien und entsprechenden Materialverbundwerkstoffen eingesetzt. Dabei lassen sich saubere, insbesondere gratfreie Schnittkanten bei zugleich extrem feinen, praktisch radienfreie Konturen realisieren. Weitere Vorteile, die sich aus dem Laserstrahl-Schneidkopf ergeben, sind der geringe thermische Energieeintrag sowie die hohe Präzision und Lagegenauigkeit der Schnittkanten.

Es sind weiterhin auch Vorrichtungen zur Laserbearbeitung bekannt, deren Schneidleistung durch die Zufuhr eines Gases, insbesondere eines Schutzgases oder Prozessgases, deutlich erhöht wird. Solche Vorrichtungen sind hierzu zusätzlich mit einer zu dem Laserstrahl achsparallelen Düse ausgestattet, die mit einer seitlichen Zuleitung für das Gas ausgestattet ist. Auf einer der Auflage abgewandten Seite verhindert eine transparente Abdeckung den unerwünschten Druckverlust und gestattet zugleich den ungehinderten Eintritt des Laserstrahls.

Durch diese Abdeckung und die Düsenöffnung hindurch wird der Laserstrahl gemeinsam mit dem Gasstrahl mit einem geeigneten Überdruck auf das Werkstück gelenkt.

Durch den hohen Druck dabei werden hohe Schneid- bzw. Abtragsleistungen realisiert, indem die geschmolzenen bzw. verdampften Substanzen durch den Gasdruck nach unten herausgedrückt und mittels Absaugung entfernt werden.

Als problematisch erweist sich dabei die geringe erzielbare Bewegungsdynamik der Vorrichtung aufgrund der erforderlichen Relativbewegung zwischen dem Schneidkopf und der Auflage, so dass die Vorschubbewegung vergleichsweise gering ist. Aufgrund der hohen bewegten Massen sind solche Vorrichtungen für sehr kleine Strukturen, die zudem in großer Stückzahl hergestellt werden müssen, nur eingeschränkt geeignet.

Die konstruktive Ausführung solcher Vorrichtungen zur Laserbearbeitung ist von den jeweiligen Einsatzbedingungen abhängig, wodurch sich eine Vielzahl unterschiedlicher Bauformen ergeben. Insbesondere sind dabei unterschiedliche Ausgestaltungen bekannt, um die gewünschte Relativbewegung zwischen dem Schneidkopf und der Auflage für das Werkstück zu realisieren. Neben beweglichen, den Schneidkopf tragenden Auslegem, Traversen oder Portalen sind auch verfahrbare Auflagen für das Werkstück realisierbar.

Grundsätzlich sind auch bereits Vorrichtungen, beispielsweise zum Bohren von Leiterplatten, bekannt, deren Bearbeitungskopf eine bewegliche Umlenkeinheit, insbesondere einzelne Umlenkspiegel aufweist. Diese Umlenkspiegel sind mittels eines Galvanometer-Scanners beweglich. Der Laserstrahl kann dadurch in jeder Position der Auflage innerhalb des durch die Extremlagen des Galvanometer-Scanners begrenzten Scannfeldes bewegt werden. Hierdurch können sehr feine Strukturen mit großer Geschwindigkeit realisiert werden, weil die geringen bewegten Massen, die dabei im Wesentlichen durch die Umlenkspiegel selbst bestimmt sind, eine hohe Bewegungsdynamik und damit hohe Vorschubgeschwindigkeiten ermöglichen.

Eine relative Lageänderung zwischen dem Schneidkopf und der Auflage ist demnach nur dann erforderlich, wenn aufgrund des vergleichsweise kleinen Scannfeldes dessen Abdeckung für die Bearbeitung nicht mehr ausreicht. Der Schneidkopf und die Auflage werden also lediglich beim Übergang von einer zur nächsten Scannfläche relativ zueinander bewegt. Die mittels solcher Vorrichtungen erreichbare Schneidleistung ist jedoch vergleichsweise gering.

Es ist bereits daran gedacht worden, die Schneidleistungen von solchen, erstgenannten Vorrichtungen mit einem Bearbeitungskopf, der eine bewegliche Umlenkeinheit für den Spiegel aufweist derart auszuführen, dass mittels einer die Bearbeitungszone überdeckenden Glocke eine Schutzgasatmosphäre aufgebaut wird. Der so erzielbare Wirkungsgrad entspricht jedoch nicht demjenigen einer Düsenanordnung, so dass der vorteilhafte Effekt vergleichsweise gering ist.

Der Erfindung liegt die Aufgabe zugrunde, eine Vorrichtung zur Laserbearbeitung zu schaffen, die zugleich eine hohe Dynamik, insbesondere also hohe Beschleunigungen, sowie auch hohe Abtragsleistungen ermöglicht. Weiterhin soll ein Arbeitsverfahren zur Laserbearbeitung eines Werkstückes mittels eines Laserstrahls geschaffen werden, welches hohe Bearbeitungsgeschwindigkeiten gestattet.

Die erstgenannte Aufgabe wird erfindungsgemäß mit einer Vorrichtung zur Laserbearbeitung gemäß den Merkmalen des Anspruchs 1 gelöst. Die Unteransprüche betreffen besonders zweckmäßige Weiterbildungen der Erfindung.

Erfindungsgemäß ist also eine Vorrichtung zur Laserbearbeitung vorgesehen, deren Schneidkopf zur Positionierung des Laserstrahls auf der Oberfläche eine insbesondere mittels einer Steuereinheit verstellbare Umlenkeinheit aufweist, deren Verstellbereich durch die Düsenöffnung bestimmt ist. Die Erfindung geht dabei von der Erkenntnis aus, dass es die Abmessungen der Düsenöffnung im Vergleich zu den bei heutigen Anforderungen an die Laserbearbeitung erforderlichen Strukturgrößen gestattet, eine zweckmäßige Bearbeitung innerhalb der durch die Düsenöffnung definierten, das Scannfeld festlegenden Bereich durchzuführen. Auf diese Weise wird also innerhalb des der Düsenöffnung entsprechenden Scannfeldes eine wesentliche Steigerung der Bewegungsdynamik ermöglicht und zugleich eine hohe Abtragsleistung aufgrund des Gasdrucks des Schutzgases oder Prozessgases sichergestellt.

Hierzu eigenen sich Abwandlungen der vorliegenden Erfindung besonders gut, wenn die Umlenkeinheit einen mittels eines Stellgliedes, insbesondere mittels eines Piezoaktors verstellbaren Reflektor aufweist. Hierdurch kann das durch die Düsenöffnung begrenzte Scannfeld in optimaler Weise genutzt werden.

Dabei erweist es sich in der Praxis als besonders Erfolg versprechend, wenn die Düsenöffnung einstellbar oder die Düse austauschbar ist und dadurch eine schnelle und problemlose Anpassung an unterschiedliche Einsatzbedingungen gestattet. Insbesondere können in Abhängigkeit der gewünschten Abtragsleistung unterschiedliche Öffnungsquerschnitte der Düsenöffnung realisiert werden und damit zugleich das Scannfeld in entsprechender Weise angepasst werden.

Der Verstellbereich der Umlenkeinheit könnte mittels der Steuereinheit derart begrenzt sein, dass der Laserstrahl auch in seinen Extremlagen nicht auf den Randbereich der Düsenöffnung gelenkt wird. Eine besonders praxisgerechte Ausgestaltung der vorliegenden Erfindung wird hingegen auch dadurch realisiert, dass die Vorrichtung einen Sensor aufweist, durch den ein auf die Düse auftreffender Laserstrahl erfassbar und ein Steuerungssignal auslösbar ist. Hierdurch wird eine Beschädigung der Düse durch den Laserstrahl auch bei einstellbaren oder austauschbaren Düsen zuverlässig vermieden, indem mittels des Sensors eine unzulässige Annäherung oder ein Auftreffen des Laserstrahls frühzeitig erfasst und ein Steuerungssignal zur Unterbrechung des Laserstrahls ausgelöst wird.

Die Vorrichtungen zur Laserbearbeitung sind grundsätzlich auch für den Einsatz beim Laserschweißen oder Laserlöten geeignet. Besonders zweckmäßig ist jedoch eine Ausführungsform, bei welcher die Vorrichtung zum Laserschneiden, -bohren oder -strukturieren ausgeführt ist. Hierdurch wird es erstmals möglich, die beim Laserschneiden und -bohren zunehmend erforderlichen, extrem kleinen Strukturen zugleich mit hoher Geschwindigkeit wie auch bei zugleich hoher Schneid- und Bohrleistung zu erzeugen.

Die zweitgenannte Aufgabe, ein Arbeitsverfahren zur Laserbearbeitung eines Werkstückes mittels eines Laserstrahls zu schaffen, welches hohe Bearbeitungsgeschwindigkeiten gestattet, wird erfindungsgemäß dadurch erreicht, dass zugleich der Schneidkopf relativ zu dem Werkstück sowie der Laserstrahl relativ zu dem Werkstück mittels einer Umlenkeinheit für den Laserstrahl überlagert bewegt werden. Hierdurch wird es möglich, während der Verlagerung des Scannfeldes innerhalb des momentanen Scannfeldes die Bearbeitung des Werkstücks mittels der Umlenkeinheit vorzunehmen. Die Bewegung kann dadurch simultan erfolgen und dadurch die Bearbeitungsgeschwindigkeit auch bei vergleichsweise großen Bearbeitungsflächen des Werkstückes wesentlich erhöht werden.

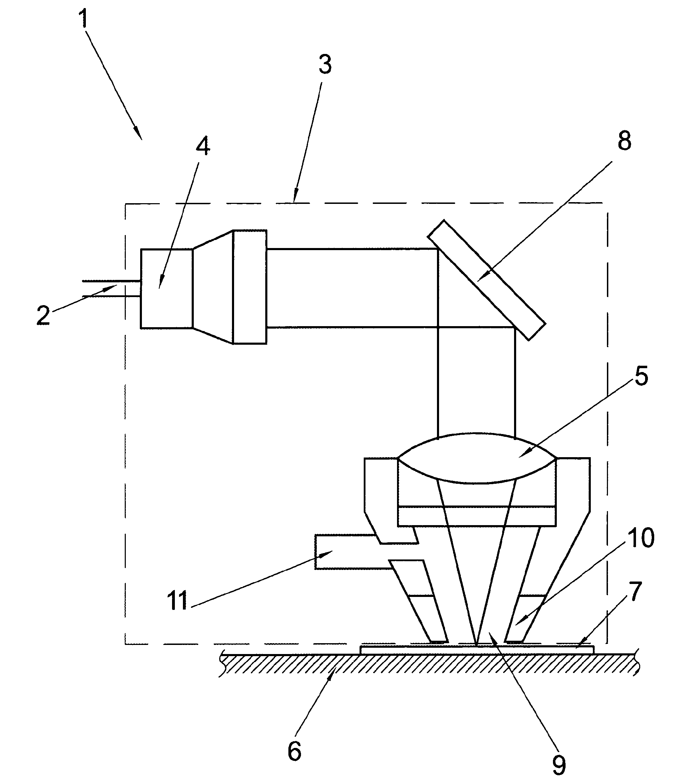

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in eine Prinzipdarstellung eine lediglich abschnittsweise gezeigte erfindungsgemäße Vorrichtung (1) zur Laserbearbeitung mittels eines Laserstrahls (2). Ein Schneidkopf (3) der Vorrichtung (1) hat eine Einrichtung (4) zur Strahlaufweitung des Laserstrahls (2) sowie eine Fokussieroptik (5) und ist gegenüber einer Auflage (6) für ein zu bearbeitendes Werkstück (7) relativ beweglich ausgeführt. Zur Positionierung eines Laserstrahls (2) auf der Oberfläche des Werkstücks (7) hat der Schneidkopf (3) zusätzlich eine verstellbare Umlenkeinheit (8) für den aufgeweiteten Laserstrahl (2). Der Verstellbereich der Umlenkeinheit (8) ist dabei durch die Düsenöffnung (9) einer Düse (10) bestimmt, durch die der Laserstrahl (2) zugleich mit einem über eine Gaszuführung (11) eintretenden Druckgas auf das zu bearbeitende Werkstück (7) gelenkt wird. Hierdurch werden zugleich eine hohe Dynamik, insbesondere also hohe Vorschubgeschwindigkeiten, sowie auch eine hohe Abtragsleistung mittels des Druckgases erreicht. Dabei kann zeitgleich der Schneidkopf (3) sowie mittels der Umlenkeinheit (8) der Laserstrahl (2) relativ zu dem Werkstück (7) überlagert bewegt werden, um so die Bearbeitungsgeschwindigkeit zu erhöhen.

## Patentansprüche

1. Vorrichtung (1) zur Laserbearbeitung mit einem Schneidkopf (3), welcher gegenüber einer Auflage (6) für ein zu bearbeitendes Werkstück (7) relativ beweglich ausgeführt ist, wobei der Schneidkopf (3) eine Fokussieroptik (5) aufweist, durch die der Laserstrahl (2) durch eine Düsenöffnung (9) einer Düse (10), zugleich mit einem mit Überdruck durch diese austretenden Gas einer zu bearbeitenden Oberfläche des Werkstücks (7) zuführbar ist, **dadurch gekennzeichnet, dass** der Schneidkopf (3) zur Positionierung des Laserstrahls (2) eine verstellbare Umlenkeinheit (8) aufweist, deren Verstellbereich durch die Düsenöffnung (9) bestimmt ist.

2. Vorrichtung (1) nach Anspruch 1, **dadurch gekennzeichnet, dass** die Umlenkeinheit (8) einen mittels eines Stellgliedes verstellbaren Reflektor aufweist.

3. Vorrichtung nach Anspruch 2, **dadurch gekennzeichnet, dass** das Stellglied einen Piezoaktor hat.

4. Vorrichtung (1) nach zumindest einem der vorhergehenden Ansprüche, **dadurch gekennzeichnet, dass** die Düsenöffnung (9) einstellbar ist.

5. Vorrichtung (1) nach zumindest einem der vorhergehenden Ansprüche, **dadurch gekennzeichnet, dass** die Düse (10) austauschbar ist.

6. Vorrichtung (1) nach zumindest einem der vorhergehenden Ansprüche, **dadurch gekennzeichnet, dass** die Vorrichtung (1) einen Sensor aufweist, wodurch ein auf die Düse (10) auftreffender Laserstrahl (2) erfassbar und ein Steuerungssignal auslösbar ist.

7. Vorrichtung (1) nach zumindest einem der vorhergehenden Ansprüche, **dadurch gekennzeichnet, dass** die Vorrichtung (1) zum Laserschneiden, -bohren oder -strukturieren ausgeführt ist.

8. Ein insbesondere für eine Vorrichtung nach Anspruch 1 bestimmtes Arbeitsverfahren zur Laserbearbeitung eines Werkstückes mittels eines Laserstrahls, **dadurch gekennzeichnet, dass** zugleich der Schneidkopf relativ zu dem Werkstück sowie der Laserstrahl relativ zu dem Werkstück mittels einer Umlenkeinheit für den Laserstrahl überlagert bewegt werden.
